# EUROPEAN PATENT SPECIFICATION

(11) **EP 2 050 632 B1**
(45) Date of publication and mention of the grant of the patent: **24.11.2010**
(21) Application number: 08163019.6
(22) Date of filing: 27.08.2008
(51) Int. Cl.: B60R 21/34

(54) **Airbag apparatus**
Airbag-Vorrichtung
Dispositif d'airbag

(30) Priority: 16.10.2007 JP 2007268685
(43) Date of publication of application: 22.04.2009
(73) Proprietor: TAKATA CORPORATION, Minato-ku, Tokyo 106-8510 (JP)
(72) Inventor: Takimoto, Takayuki, Tokyo Tokyo 106-8510 (JP); Kobayashi, Yoshihiro, Tokyo Tokyo 106-8510 (JP)
(74) Representative: Vossius & Partner

(56) References cited:
- JP-A- 2005 096 686
- JP-A- 2006 298 150

## Description

The present invention belongs to the technical field of an airbag apparatus that is inflated and developed outside a vehicle by gas from an inflator in an emergency such as a collision of the vehicle with an object for cushioning the shock applied to the object and the vehicle.

There are apparatuses that inflate an airbag outside the pillar portion of a vehicle at the time of a collision between the vehicle and, for example, a pedestrian to cushion the shock when the pedestrian re-collides with thevehicle.
JP 2006 298150 A relates to an airbag apparatus which is intended to be disposed along a front pillar so as to be inflated outside a vehicle. In order to provide efficient shock absorption without excessively narrowing the field of view of an occupant, the airbag elements are superimposed at superimposing portions and bonded to one another with an adhesive agent. A superimposed state in a developing direction is kept even in a deploying state.

For example, there is disclosed an airbag apparatus in which, when an airbag body is inflated in front of the upper part of a front pillar, a cover is developed outward in the direction of the width of the vehicle, and the airbag body is inflated inward in the direction of the width of the vehicle and held at the inflating position, and thereby the shock cushioning performance is improved (see JP-2002-283939 A (Patent Document 1)).

There is also disclosed an airbag apparatus in which a strap shorter than the full length of an airbag is stretched from the upper end to the lower end of the airbag and thereby the airbag inflates and develops along the outer side surface of a front pillar (see JP-2003-306099 A (Patent Document 2)).

In the airbag apparatus described in Patent Document 1, the airbag is disposed in the front pillar and comes into contact with a garnish panel, and thereby the inflation direction is controlled. Therefore, if the strength of the garnish panel is not high, the garnish panel can be broken. If the strength of the garnish panel is too high, the airbag cannot smoothly develop.

In Patent Document 2, control of the inflation direction relative to the front pillar is not described.

The present invention is made in view of the above situation, and an object thereof is to provide an airbag apparatus that inflates in a stable state and thereby catches, for example, a pedestrian appropriately and softly.

To solve the above-described problems, according to the invention of Claim 1, an airbag apparatus includes an airbag, an inflator that discharges gas into the airbag, a pipe that connects the airbag and the inflator, a detecting means that detects a collision, a control means that activates the inflator in response to a signal from the detecting means, and a cover that houses the airbag. The airbag disposed along a front pillar is inflated outside a vehicle. The airbag apparatus includes a bag inflation direction limiting member disposed so as to hide the gap between the cover and the front pillar.

According to the invention of Claim 2, the pipe has a pipe outlet that discharges gas in the airbag, and the bag inflation direction limiting member is disposed at least near the pipe outlet on the windshield side of the front pillar.

According to the invention of Claim 3, the bag inflation direction limiting member has a hiding portion that hides the gap between a fender and a windshield of a vehicle body.

According to the invention of Claim 4, the bag inflation direction limiting member has a bag fixing portion that fixes the airbag, a side wall guide portion that upstands relative to the windshield, and an extension portion that extends from one end of the side wall guide portion substantially parallel to the cover.

According to the invention of Claim 5, a cutout is provided at the junction between the side wall guide portion and the extension portion.

According to the present invention, an airbag apparatus includes an airbag, an inflator that discharges gas into the airbag, a pipe that connects the airbag and the inflator, a detecting means that detects a collision, a control means that activates the inflator in response to a signal from the detecting means, and a cover that houses the airbag. The airbag disposed along a front pillar is inflated outside a vehicle. The airbag apparatus includes a bag inflation direction limiting member disposed so as to hide the gap between the cover and the front pillar. Therefore, when the airbag inflates, the airbag can be prevented from getting into the gap between the front pillar and the cover and protruding therefrom. Therefore, the airbag can smoothly inflate and develop.

In addition, the pipe has a pipe outlet that discharges gas in the airbag, and the bag inflation direction limiting member is disposed at least near the pipe outlet on the windshield side of the front pillar. Therefore, when the airbag starts to inflate, the airbag can be prevented from getting into the gap between the front pillar and the cover and protruding therefrom. Therefore, the airbag can smoothly inflate and develop.

In addition, since the bag inflation direction limiting member has a hiding portion that hides the gap between a fender and a windshield of a vehicle body, the airbag can be prevented from getting under the fender.

In addition, the bag inflation direction limiting member has a bag fixing portion that fixes the airbag, a side wall guide portion that upstands relative to the windshield, and an extension portion that extends from one end of the side wall guide portion substantially parallel to the cover. Therefore, the airbag can be stably held and can be stably inflated and developed.

In addition, a cutout is provided at the junction between the side wall guide portion and the extension portion. Therefore, when the airbag inflates, the extension portion can be easily deformed. Therefore, the airbag can inflate over a wide range in the width direction.

The embodiments of the present invention will now be described with reference to the drawings.
FIG. 1 shows an embodiment of an airbag according to the present invention;
FIG. 2 is a perspective view of a vehicle equipped with an airbag apparatus of this embodiment;
FIG. 3 is a perspective view of a front pillar of a vehicle of this embodiment and its vicinity;
FIG. 4 is a sectional view taken along line a-a of FIG. 3;
FIG. 5 shows a first embodiment of a bag inflation direction limiting member 22;
FIG. 6 shows part of the front pillar 2 as viewed from the windshield 6 side;
FIG. 7 is a perspective view of the front pillar and its vicinity with the cover, the airbag, and the fender omitted;
FIG. 8 is a sectional view taken along line b-b of FIG. 7;
FIG. 9 shows the operation of the airbag apparatus 10 of this embodiment;
FIG. 10 is a sectional view of the airbag apparatus 10 in operation;
FIG. 11 is a perspective view of the front pillar 2 and its vicinity in the completion stage of inflation;
FIG. 12 is a sectional view taken along line c-c of FIG. 11;
FIG. 13 is a sectional view taken along line d-d of FIG. 11;
FIG. 14 is an enlarged view of the through anchor and its vicinity;
FIG. 15 shows a second embodiment of a bag inflation direction limiting member 22; and
FIG. 16 shows a third embodiment of a bag inflation direction limiting member 22.

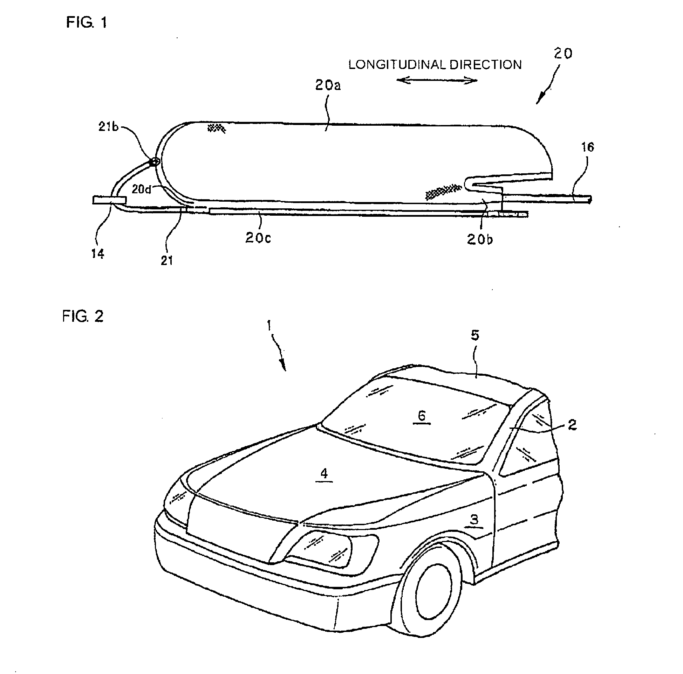

FIG. 1 shows an airbag 20 of this embodiment. The airbag 20 of this embodiment is formed by sewing the periphery of a single base cloth, and includes a main inflating portion 20a, a pipe connecting portion 20b, and tubular portions 20c as examples of inserting portion. The main inflating portion 20a has a substantially elliptical shape. When inflated, the main inflating portion 20a cushions the shock to a collision object such as a pedestrian. The pipe connecting portion 20b protrudes from the main inflating portion 20a. A pipe 16 is inserted into the pipe connecting portion 20b, and then the pipe connecting portion 20b is caulked. The tubular portions 20c are located on the opposite side of the airbag 20 from the shock absorbing side. The tubular portions 20c are formed in a tubular shape so that a below-described developing position limiting means 21 can be inserted. The tubular portions 20c are preferably provided at least at one end 20d of the main inflating portion 20a and at the pipe connecting portion 20b so that the position can be limited throughout the length of the airbag 20.

Next, a state where an airbag apparatus 10 including the airbag 20 is installed in a vehicle 1 will be described.

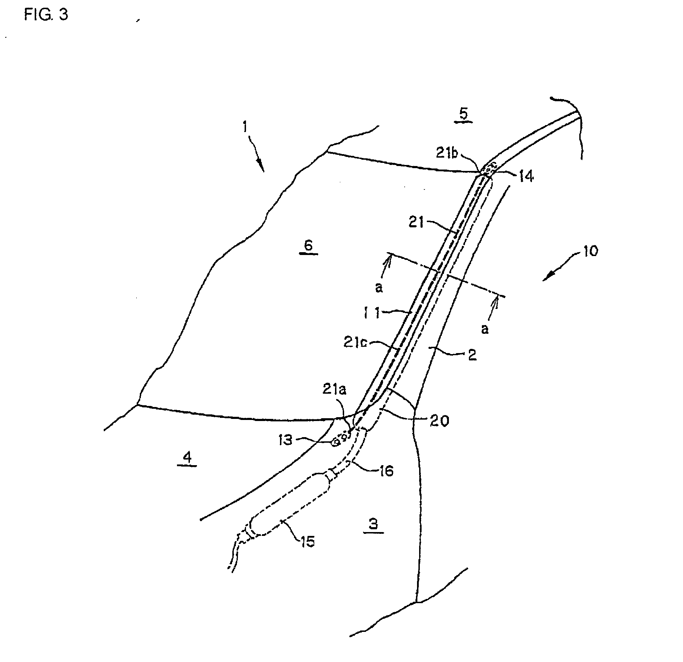

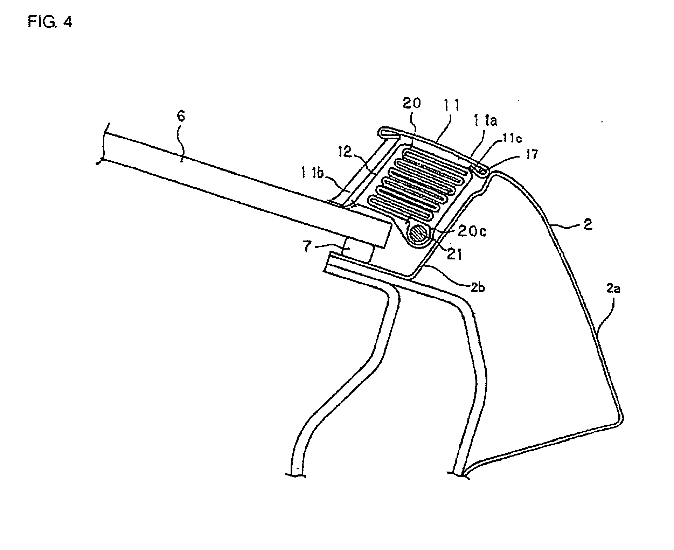

FIG. 2 is a perspective view of a vehicle equipped with an airbag apparatus of this embodiment. FIG. 3 is a perspective view of a front pillar of a vehicle of this embodiment and its vicinity. FIG. 4 is a sectional view taken along line a-a of FIG. 3.

In the figures, reference numeral 1 denotes a vehicle, reference numeral 2 denotes a front pillar, reference numeral 3 denotes a fender, reference numeral 4 denotes a hood, reference numeral 5 denotes a roof, reference numeral 6 denotes a windshield, reference numeral 7 denotes a seal, reference numeral 10 denotes an airbag apparatus, reference numeral 11 denotes a cover, reference numeral 12 denotes a bag case, reference numeral 13 denotes an anchor, reference numeral 14 denotes a through anchor, reference numeral 15 denotes a gas generator, reference numeral 16 denotes a pipe, reference numeral 20 denotes an airbag, and reference numeral 21 denotes a developing position limiting means.

A vehicle 1 has front pillars 2 that connect a member (not shown) or an engine room frame (not shown) and a roof 5. In addition, the vehicle 1 has a windshield 6 surrounded by a hood 4, the roof 5, and the front pillars 2 and attached using a seal 7.

An airbag apparatus 10 is housed in the windshield 6 side of the front pillar 2 and the fender 3 on each side. The front pillar 2 has a first surface 2a that faces the outside of the vehicle 1 and a second surface 2b that faces the windshield. On the second surface 2b side, an airbag 20 is folded and housed in a bag case 12 together with a developing position limiting means 21, and housed in a cover 11.

The cover 11 has a substantially L-shaped cross-sectional shape and includes an upper cover 11a and a side cover 11b, and is disposed so as to hide the airbag 20 folded on the second surface 2b side of the front pillar 2. The folded airbag 20 may be directly housed in the cover 11 without being housed in the bag case 12.

A cover restraining member 17 such as a strap is passed through the folded portion 11c of the upper cover 11a. One end 17a of the cover restraining member 17 is engaged with part of the vehicle body such as the base portion of the front pillar 2 or a member by an anchor 13 or a below-described bag inflation direction limiting member 22. The other end 17b thereof is engaged with a through anchor 14. Although not shown, the cover restraining member 17 may be divided into a first cover restraining member 17 that connects the anchor 13 and the cover 11, and a second cover restraining member 17 that connects the through anchor 14 and the cover 11.

The developing position limiting means 21 is a string-like or belt-like member. One end 21a thereof is engaged with part of the vehicle body such as the base portion of the front pillar 2 by the anchor 13. The other end 21b thereof is passed through an insertion hole 14a of the through anchor 14 and is engaged with the air bag 20 by sewing or adhesion. For example, it is preferable to engage the other end 21b with a portion having an insertion hole provided in the airbag 20. The middle portion 21c thereof is passed through a tubular portion 20c formed in the airbag 20, for example, by sewing.

The one end 21a may be engaged with a gas generator 15 or the airbag 20. The through anchor 14 may have a smooth structure having, for example, a guide or a pulley so that friction does not significantly affect the developing position limiting means 21. Although, in this embodiment, the tubular portion 20c is provided substantially throughout the length of the airbag 20 along the front pillar 2, a plurality of tubular portions 20c may be provided at intervals.

Under the fender 3 or the hood 4, a gas generator 15 that generates gas to inflate the airbag 20 and a pipe 16 that supplies the gas generated in the gas generator 15 to the airbag 20 are housed.

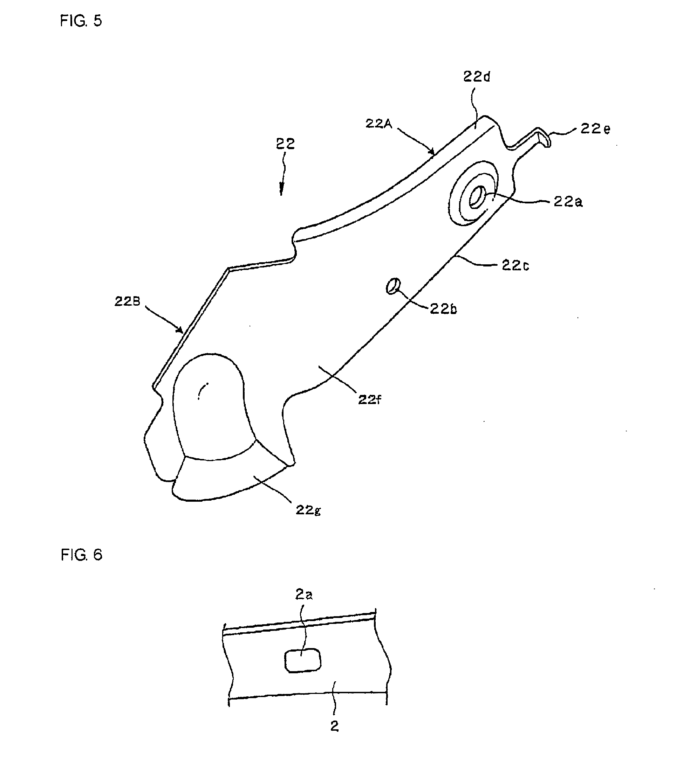

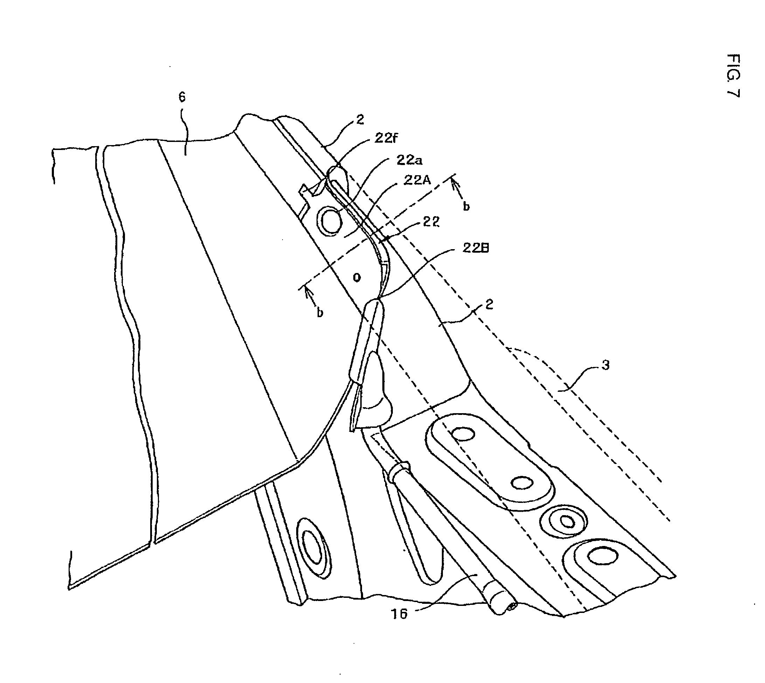

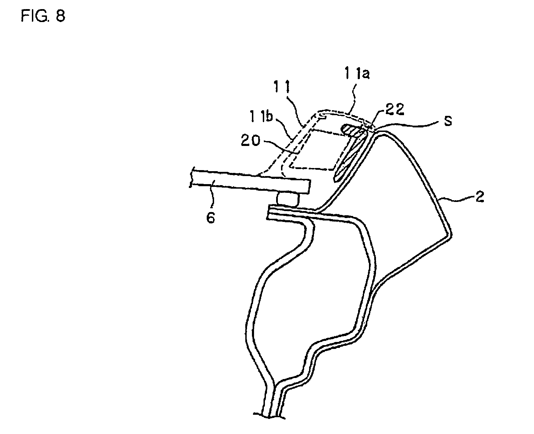

FIG. 5 shows a bag inflation direction limiting member 22. FIG. 6 shows part of the front pillar 2 as viewed from the windshield 6 side. FIG. 7 is a perspective view of the front pillar 2 and its vicinity with the cover 11, the airbag 20, and the fender 3 omitted. FIG. 8 is a sectional view taken along line b-b of FIG. 7.

As shown in FIG. 5, the bag inflation direction limiting member 22 includes a fixing portion 22A that has a substantially L-shaped cross sectional shape and that is a plate-like member and a hiding portion 22B that hides the gap between the fender 3 and the windshield 6. The fixing portion 22A has a vehicle body fixing portion 22a that is fixed to the vehicle 1, for example, with a screw, a bag fixing portion 22b that fixes the airbag 20, a side wall guide portion 22c that upstands substantially perpendicularly to the windshield 6, and an extension portion 22d that extends from one end of the side wall guide portion 22c substantially parallel to the upper cover 11a. The side wall guide portion 22c is provided with a hook portion 22e to be hooked to an engaging hole 2a provided in the front pillar 2 shown in FIG. 6. The hiding portion 22B has a joining portion 22f that has a smooth curved surface along the front pillar 2 and that is joined to the fixing portion 22A, and a curved portion 22g that is provided at the end opposite from the fixing portion 22A and through which the pipe 16 is passed.

FIGS. 7 and 8 show a state where the bag inflation direction limiting member 22 is attached to the vehicle 1. The hook portion 22e shown in FIG. 5 is hooked to the engaging hole 2a of the front pillar 2 shown in FIG. 6, and the vehicle body fixing portion 22a is fixed to the vehicle 1, for example, with a screw. At this time, the fixing portion 22A is securely attached so as to fit in the front pillar 2. The hiding portion 22B hides the gap between the fender 3 and the windshield 6 so that the airbag 20 can be prevented from getting under the fender 3, and guides the pipe 16 with the curved portion 22g.

After the bag inflation direction limiting member 22 is attached to the vehicle 1, the airbag apparatus 10 shown in FIGS. 3 and 4 is fixed, and the cover 11 is closed as shown in FIG. 8.

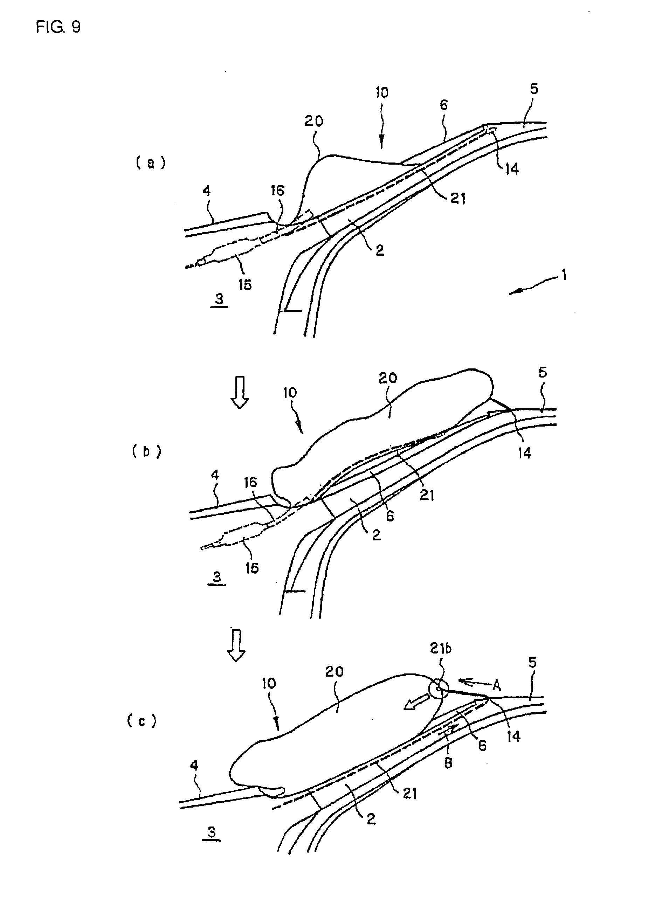

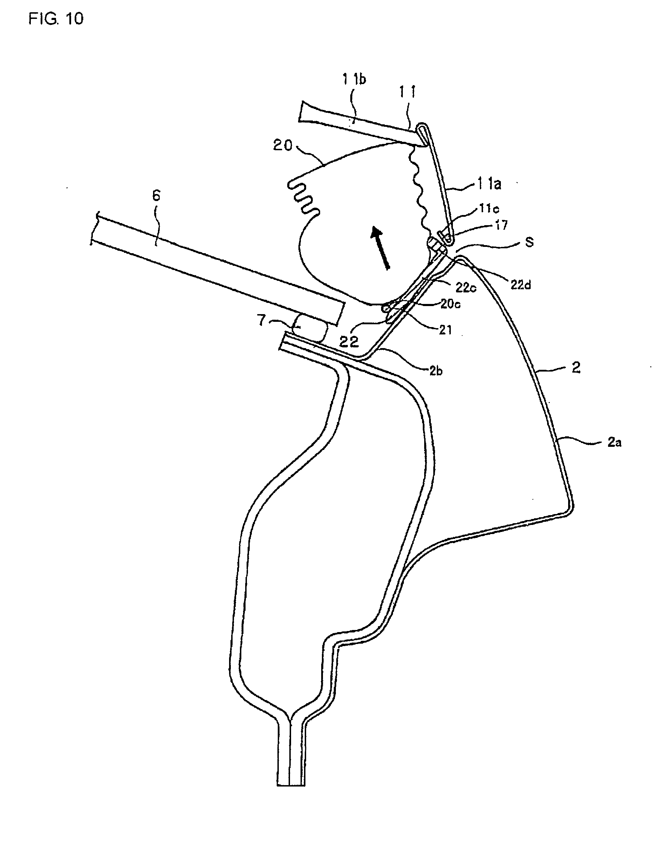

Next, the operation of the airbag apparatus 10 of this embodiment will be described. FIG. 9 shows the operation of the airbag apparatus 10 of this embodiment. FIG. 10 is a sectional view of the airbag apparatus 10 in operation.

The airbag apparatus 10 in its housed state shown in FIG. 3 is activated when the vehicle 1 collides with an object (not shown) and a detecting means (not shown) detects the impact force applied to the vehicle 1, on the basis of the detection signal, for example, by a control means.

FIG. 9 (a) shows an early stage of inflation in which the airbag apparatus 10 starts operation, gas flows from the gas generator 15 housed in the fender 3 through the pipe 16 into the airbag 20, and the airbag 20 starts to inflate. In the early stage of inflation, the fender 3 side of the airbag 20 inflates first, and the cover 11 shown in FIGS. 3 and 4 opens due to the inflation pressure.

At this time, as shown in FIG. 10, the inflation direction of the airbag 20 is limited by the side wall guide portion 22c and the extension portion 22d of the bag inflation direction limiting member 22, to the direction toward the center of the vehicle. As a result, the gap S between the cover 11 and the front pillar 2 is hidden, and the airbag 20 does not protrude from the gap S. Therefore, the airbag apparatus 10 can stably operate.

FIG. 9 (b) shows a middle stage of inflation in which gas flows from the gas generator 15 through the pipe 16 into the airbag 20, and the airbag 20 continues to inflate. In the middle stage of inflation, the entire airbag 20 is completely exposed outside from its folded state. At this time, no tension is applied to the developing position limiting means 21, and the inflation of the airbag 20 is continued.

FIG. 9 (c) shows a completion stage of inflation in which the inflation of the airbag 20 is completed. In the completion stage of inflation, the airbag 20 is completely inflated. The state of the airbag apparatus 10 in the completion stage of inflation will be described.

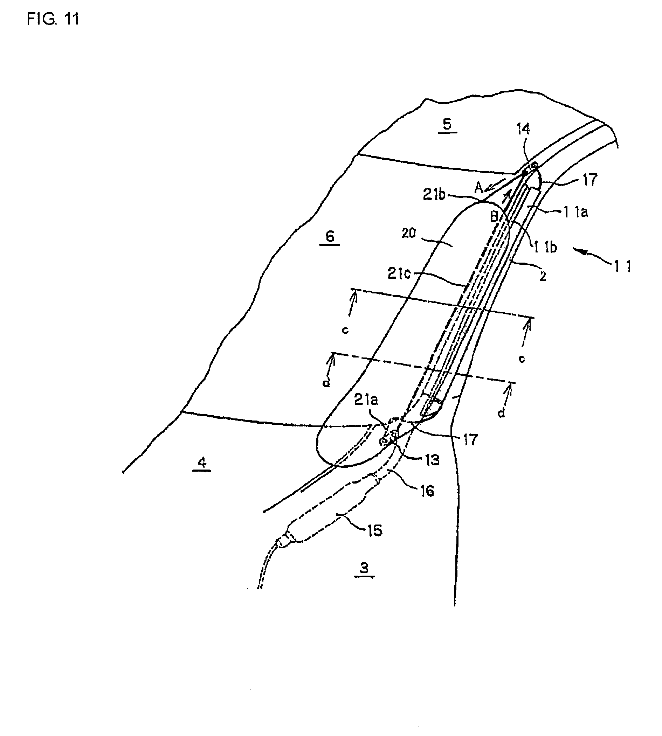

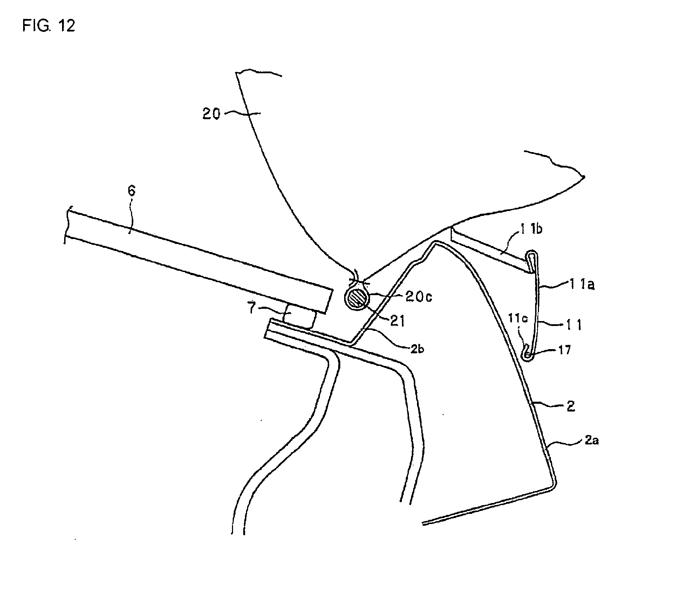

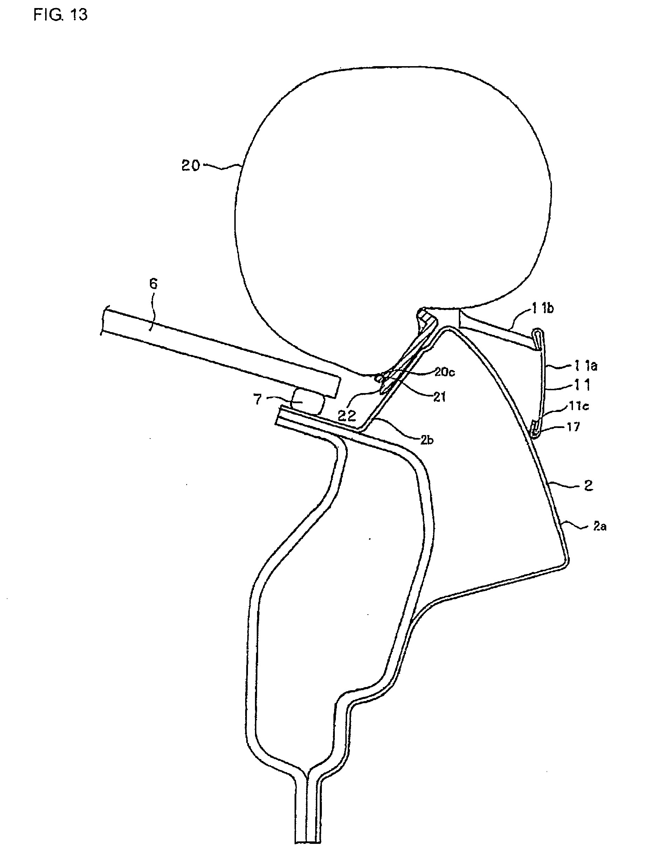

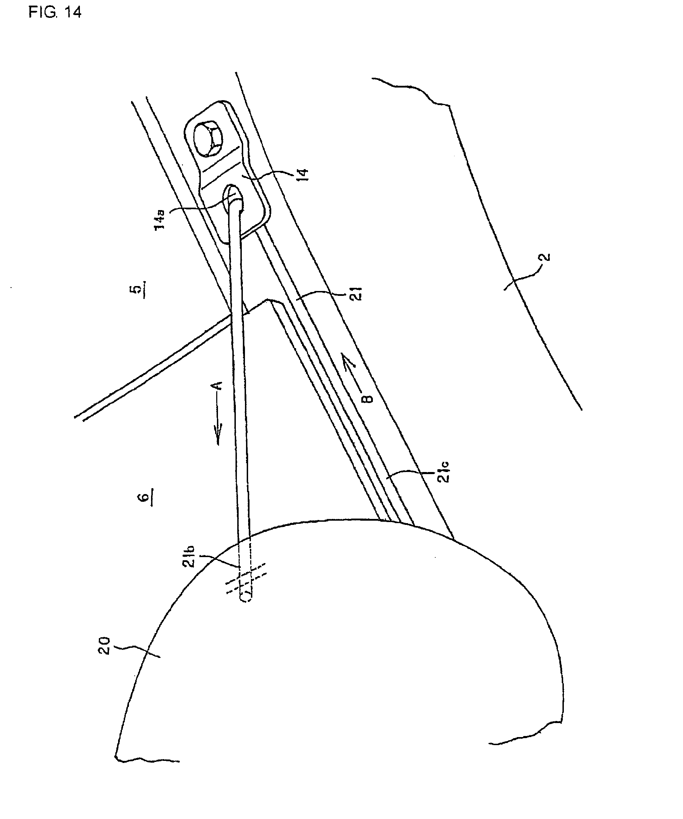

FIG. 11 is a perspective view of the front pillar 2 and its vicinity in the completion stage of inflation. FIG. 12 is a sectional view taken along line c-c of FIG. 11. FIG. 13 is a sectional view taken along line d-d of FIG. 11. FIG. 14 is an enlarged view of the through anchor 14 and its vicinity.

In the completion stage of inflation, the airbag 20 develops above parts of the fender 3 and the hood 4 and in front of the front pillar 2, in the direction along the front pillar 2.

At this time, the other end 21b of the developing position limiting means 21 engaged with the airbag 20 is pulled in response to the inflation of the airbag 20, as shown by arrow A, away from the roof 5. Therefore, relative to the through anchor 14, the middle portion 21c of the developing position limiting means 21 is pulled, as shown by arrow B, toward the roof 5, and is pressed against the windshield 6 and the front pillar 2. As shown in FIG. 12, the airbag 20 through which the developing position limiting means 21 is passed is also pressed against the windshield 6 and the front pillar 2.

It is possible to provide a plurality of developing position limiting means 21. The form of the developing position limiting means 21 is not limited to this embodiment but any other form can be taken as long as it presses the airbag 20 against the windshield 6 and the front pillar 2 when the airbag 20 inflates.

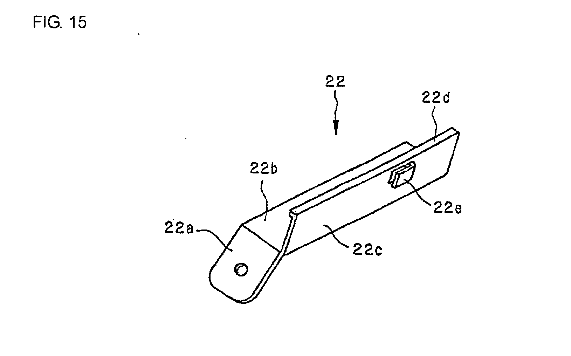

FIG. 15 shows a second embodiment of a bag inflation direction limiting member 22. As shown in FIG. 15, the bag inflation direction limiting member 22 is a fixing member that has a substantially L-shaped cross sectional shape, and has a vehicle body fixing portion 22a that is fixed to the vehicle 1, for example, with a screw, a bag fixing portion 22b that fixes the airbag 20, a side wall guide portion 22c that upstands substantially perpendicularly to the windshield 6, and an extension portion 22d that extends from one end of the side wall guide portion 22c substantially parallel to the upper cover 11a. The side wall guide portion 22c is provided with a hook portion 22e to be hooked to the engaging hole 2a provided in the front pillar 2 shown in FIG. 6.

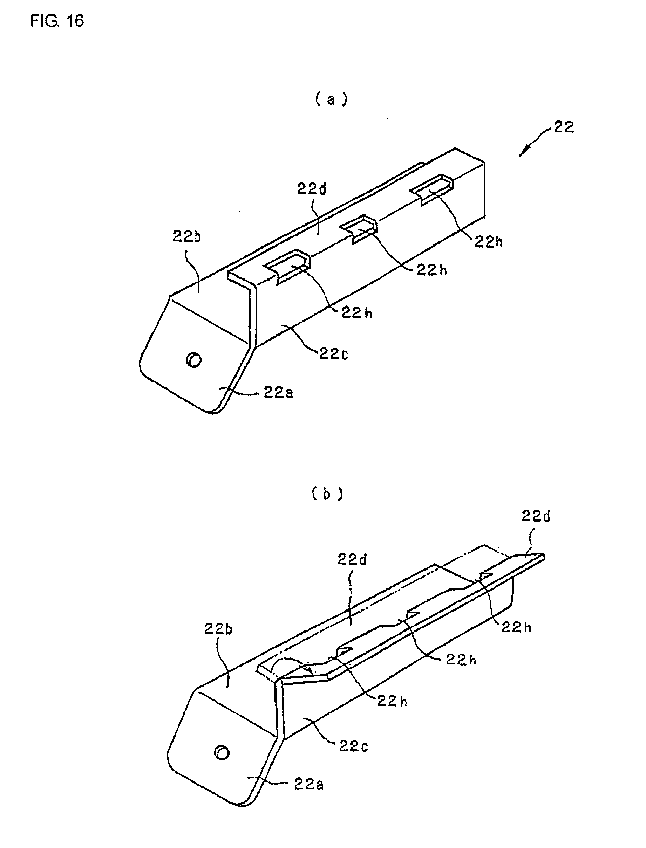

FIG. 16 shows a third embodiment of a bag inflation direction limiting member 22. In this embodiment, as shown in FIG. 16 (a), cutouts 22h are provided at the border between the side wall guide portion 22c and the extension portion 22d of the bag inflation direction limiting member 22 so that the extension portion 22d can easily bend relative to the side wall guide portion 22c as shown in FIG. 16 (b). This structure can be applied to the bag inflation direction limiting members 22 of the first and second embodiments and bag inflation direction limiting members 22 having other structures.

Due to this structure, in the early stage of inflation, the inflation direction of the airbag 20 is limited to the direction toward the center of the vehicle, the airbag 20 does not protrude from the gap between the cover 11 and the front pillar 2, and therefore the airbag apparatus 10 can stably operate; and in the completion stage of inflation, since the airbag 20 develops in front of the front pillar 2 and in the direction along the front pillar 2, the airbag 20 can develop over a wide range.

Although, in this embodiment, the gas generator 15 is housed in the fender 3, the gas generator 15 may be housed in the roof 5. In this case, it is preferable to dispose the anchor 13 in the roof 5 and the through anchor 14 in the fender 3.

As described above, the airbag apparatus 10 includes the bag inflation direction limiting member 22 disposed so as to hide the gap between the cover 11 and the front pillar 2. Therefore, when the airbag 20 inflates, the airbag 20 can be prevented from getting into the gap between the front pillar 2 and the cover 11 and protruding therefrom. Therefore, the airbag 20 can smoothly inflate and develop.

In addition, the pipe 16 has a pipe outlet 16a that discharges gas in the airbag 20, and the bag inflation direction limiting member 22 is disposed at least near the pipe outlet 16a on the windshield 6 side of the front pillar 2. Therefore, when the airbag 20 starts to inflate, the airbag 20 can be prevented from getting into the gap between the front pillar 2 and the cover 11 and protruding therefrom. Therefore, the airbag 20 can smoothly inflate and develop.

In addition, since the bag inflation direction limiting member 22 has a hiding portion 22B that hides the gap between a fender 3 and a windshield 6 of a vehicle body, the airbag 20 can be prevented from getting under the fender 3.

In addition, the bag inflation direction limiting member 22 has a bag fixing portion 22b that fixes the airbag 20, a side wall guide portion 22c that upstands relative to the windshield 6, and an extension portion 22d that extends from one end of the side wall guide portion 22c substantially parallel to the cover. Therefore, the airbag 20 can be stably held and can be stably inflated and developed.

In addition, a cutout 22h is provided at the junction between the side wall guide portion 22c and the extension portion 22d. Therefore, when the airbag 20 inflates, the extension portion 22d can be easily deformed. Therefore, the airbag 20 can inflate over a wide range in the width direction.

According to the present invention, an airbag apparatus includes an airbag, an inflator that discharges gas into the airbag, a pipe that connects the airbag and the inflator, a detecting means that detects a collision, a control means that activates the inflator in response to a signal from the detecting means, and a cover that houses the airbag. The airbag disposed along a front pillar is inflated outside a vehicle. The airbag apparatus includes a bag inflation direction limiting member disposed so as to hide the gap between the cover and the front pillar. Therefore, when the airbag inflates, the airbag can be prevented from getting into the gap between the front pillar and the cover and protruding therefrom. Therefore, the airbag can smoothly inflate and develop.

In addition, the pipe has a pipe outlet that discharges gas in the airbag, and the bag inflation direction limiting member is disposed at least near the pipe outlet on the windshield side of the front pillar. Therefore, when the airbag starts to inflate, the airbag can be prevented from getting into the gap between the front pillar and the cover and protruding therefrom. Therefore, the airbag can smoothly inflate and develop.

In addition, since the bag inflation direction limiting member has a hiding portion that hides the gap between a fender and a windshield of a vehicle body, the airbag can be prevented from getting under the fender.

In addition, the bag inflation direction limiting member has a bag fixing portion that fixes the airbag, a side wall guide portion that upstands relative to the windshield, and an extension portion that extends from one end of the side wall guide portion substantially parallel to the cover. Therefore, the airbag can be stably held and can be stably inflated and developed.

In addition, a cutout is provided at the junction between the side wall guide portion and the extension portion. Therefore, when the airbag inflates, the extension portion can be easily deformed. Therefore, the airbag can inflate over a wide range in the width direction.

## Claims

1. An airbag apparatus comprising:
an airbag (20) ;
an inflator (15) that discharges gas into the airbag;
a pipe (16) that connects the airbag and the inflator;
a detecting means that detects a collision;
a control means that activates the inflator in response to a signal from the detecting means; and
a cover (11) that houses the airbag,
wherein the airbag is intended to be disposed along a front pillar (2) so as to be inflated outside a vehicle, **characterized in that**
the airbag apparatus comprises a bag inflation direction limiting member (22) disposed so as to hide a gap (S) between the cover and the front pillar.

2. The airbag apparatus according to Claim 1, wherein the pipe has a pipe outlet (16a) that discharges gas in the airbag, and the bag inflation direction limiting member is disposed at least near the pipe outlet on the windshield (6) side of the front pillar.

3. The airbag apparatus according to Claim 1 or 2, wherein the bag inflation direction limiting member has a hiding portion (22B) that hides the gap between a fender (3) and a windshield (6) of a vehicle body.

4. The airbag apparatus according to any one of Claims 1 to 3, wherein the bag inflation direction limiting member has a bag fixing portion (22b) that fixes the airbag, a side wall guide portion (22c) that upstands relative to the windshield and an extension portion (22d) that extends from one end of the side wall guide portion substantially parallel to the cover.

5. The airbag apparatus according to Claim 4, wherein a cutout (22h) is provided at the junction between the side wall guide portion and the extension portion.

## Patentansprüche

1. Airbag-Vorrichtung mit:
einem Gassack (20);
einer Aufblaseinrichtung (15) zum Ausgeben von Gas in den Gassack;
einem Rohr (16) zum Verbinden des Gassacks mit der Aufblaseinrichtung;
einer Erkennungseinrichtung zum Erkennen eines Aufpralls;
einer Steuereinrichtung zum Aktivieren der Aufblaseinrichtung als Reaktion auf ein Signal von der Erkennungseinrichtung; und
einer Abdeckung (11) zum Unterbringen des Gassacks;
wobei der Gassack zur Anordnung entlang einer A-Säule (2) bestimmt ist, um außerhalb eines Fahrzeugs aufgeblasen zu werden,
**dadurch gekennzeichnet, dass**
die Airbag-Vorrichtung eine Einrichtung (22) zum Begrenzen der Aufblasrichtung des Gassacks aufweist, die angeordnet ist, um einen Spalt (S) zwischen der Abdeckung und der A-Säule zu verdecken.

2. Airbag-Vorrichtung nach Anspruch 1, wobei das Rohr einen Rohrauslaß (16a) zum Ausgeben von Gas in den Gassack aufweist und die Einrichtung zum Begrenzen der Aufblasrichtung des Gassacks zumindest in der Nähe des Rohrauslasses an der der Windschutzscheibe (6) zugewandten Seite der A-Säule angeordnet ist.

3. Airbag-Vorrichtung nach Anspruch 1 oder 2, wobei die Einrichtung zum Begrenzen der Aufblasrichtung des Gassacks ein Abdeckteil (22B) aufweist, das einen Spalt zwischen einem Kotflügel (3) und einer Windschutzscheibe (6) eines Fahrzeugs verbirgt.

4. Airbag-Vorrichtung nach einem der Ansprüche 1 bis 3, wobei die Einrichtung zum Begrenzen der Aufblasrichtung des Gassacks ein Sackbefestigungsteil (22b) zum Befestigen des Gassacks, ein Seitenwandführungsteil (22c), das relativ zur Windschutzscheibe aufrecht steht, und ein Verlängerungsteil (22d) aufweist, das sich von einem Ende des Seitenwandführungsteils im Wesentlichen parallel zur Abdeckung erstreckt.

5. Airbag-Vorrichtung nach Anspruch 4, wobei ein Ausschnitt (22h) an der Verbindungsstelle zwischen dem Seitenwandführungsteil und dem Verlängerungsteil vorgesehen ist.

## Revendications

1. Dispositif d'airbag comprenant :
un airbag (20) ;
un générateur de gaz (15) soufflant un gaz à l'intérieur de l'airbag ; un conduit (16) reliant l'airbag au générateur de gaz ;
un moyen de détection pour la détection d'un choc ;
un moyen de commande activant le générateur de gaz en réponse à un signal du moyen de détection ; et
un couvercle (11) recouvrant l'airbag,
où l'airbag est prévu pour être disposé le long d'un montant avant (2), de manière à être gonflé à l'extérieur d'un véhicule, **caractérisé en ce que**
le dispositif d'airbag comprend un élément limiteur de direction de gonflement de coussin (22) disposé de manière à cacher une lacune (5) entre le couvercle et le montant avant.

2. Dispositif d'airbag selon la revendication 1, où le conduit a une sortie de conduit (16a) refoulant du gaz dans l'airbag, et où l'élément limiteur de direction de gonflement de coussin est disposé au moins à proximité de la sortie de conduit sur le côté pare-brise (6) du montant avant.

3. Dispositif d'airbag selon la revendication 1 ou la revendication 2, où l'élément limiteur de direction de gonflement de coussin a une partie de cache (22B) qui cache la lacune entre une aile (3) et un pare-brise (6) d'une caisse de véhicule.

4. Dispositif d'airbag selon l'une des revendications 1 à 3, où l'élément limiteur de direction de gonflement de coussin a une partie de fixation de coussin (22b) qui fixe l'airbag, une partie de guidage de paroi latérale (22c) en saillie par rapport au pare-brise, et une partie d'extension (22d) qui s'étend d'une extrémité de la partie de guidage de paroi latérale, sensiblement parallèlement au couvercle.

5. Dispositif d'airbag selon la revendication 4, où une découpe (22h) est prévue à la jonction entre la partie de guidage de paroi latérale et la partie d'extension.
